Europäisches Patentamt

European Patent Office

Office européen des brevets

(19)

(11) **EP 1 313 194 A2**

(12) **EUROPEAN PATENT APPLICATION**

(43) Date of publication:
 **21.05.2003 Bulletin 2003/21**

(51) Int Cl.⁷: **H02H 7/30**, H02H 3/40

(21) Application number: **02257982.5**

(22) Date of filing: **20.11.2002**

(84) Designated Contracting States:
 **AT BE BG CH CY CZ DE DK EE ES FI FR GB GR
 IE IT LI LU MC NL PT SE SK TR**
 Designated Extension States:
 **AL LT LV MK RO SI**

(30) Priority: **20.11.2001 GB 0127745**

(71) Applicant: **Alstom
 75116 Paris (FR)**

(72) Inventor: **Q Bo, Zhiqian
 Holloway, Bath BA2 4QD (GB)**

(74) Representative: **Dargavel, Laurence Peter
 ALSTOM Intellectual Property Dept.
 PO Box 30
 Lichfield Road
 Stafford ST17 4LN (GB)**

(54) **Protection of double circuit power lines**

(57)    A method for the protection of double circuit electrical power lines (IL-1, IL-2) protected by local and remote circuit breakers (BS1, BS2, RR1, RR2, BR3, BR4, BR5). The method is performed by a local protection apparatus (RS1/RS2 or RS12) and comprises sensing electrical quantities measured at the local end of both circuits of the double circuit lines, monitoring the sensed electrical quantities to detect occurrence of a fault (FI or F2 or F3), delaying operation of the local circuit breakers (BS1, BS2) on both circuits (IL-1, IL-2) for a time period sufficient to allow detection of operation of a remote circuit breaker (BR1, BR2 or BR3, BR4, BR5) by its effect on the electrical quantities on both circuits, and if the effect of a fault on a circuit of the double circuit line persists after remote circuit breaker operation, triggering operation of a local circuit breaker (BS1 or BS2) to isolate the fault.

**Figure 2(a)**

EP 1 313 194 A2

## Description

## Field of the Invention

This invention relates to improvements in protection apparatus for the protection of electrical power lines, in particular protection apparatus enabling fast non-communication protection of power lines having double circuit configurations.

## Background of the Invention

Two of the Applicant's previous inventions in this field are disclosed, for example, in published UK Patent Applications GB 2 341 738 A and GB 2 341 737 A, to which the reader is referred for necessary background to the present invention.

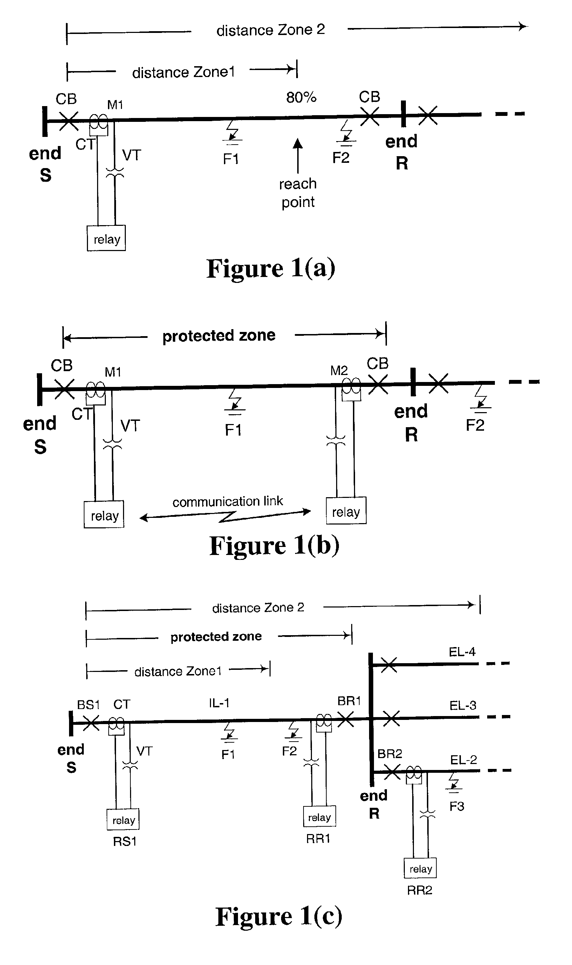

Known fault protection techniques for power lines (including power cables) can be broadly classified into two categories, unit and non-unit protection techniques. Each type has its own limitations. These prior art techniques will be described with reference to Figures 1(a) to (c), in which CB and the symbol × represents a circuit breaker, CT represents a current transformer, and VT represents a voltage transformer.

The technique of non-unit protection, e.g., distance protection, has the disadvantage that it can not completely cover the entire protection zone, which is normally defined as the whole length of a line section. Figure 1(a) shows such a line section extending between the ends 'S' and 'R'. One of the main reasons for incomplete coverage is that the distance protection apparatus (loosely known as a "relay") only has one measurement point 'M1', as shown in Figure 1(a), at which to sense the power line's electrical parameters. Hence, overlapping zones of protection are provided. For instance, Zone 1, which normally covers up to 80% of the total line section length, extends from the relay location to a point known as the "Reach Point". The relay operates instantly if a fault such as F1 is inside Zone 1, i.e., between the relay measurement point M1 and the reach point. For a fault beyond the Zone 1 reach point, for example 'F2' in Figure 1(a), delayed operation of the relay has to occur. Normally a time delay of 0.3 to 0.4 second is required in setting of the relay operating time to cover the next zone, known as Zone 2. Zone 2 is normally arranged to cover up to 50% of the shortest adjacent line section beyond the protected line section, as shown in Figure 1(a). Consequently, Zone 2 does not have a well-defined boundary.

On the other hand, unit protection techniques, such as current differential protection, have a clearly defined protection zone as shown in Figure 1(b), because they use information about a fault F1 sensed by relays at both ends S and R of a protected line section, based on measurement points 'M1' and 'M2', one point for each relay. A communication link is used to transmit information about the system condition from one end of the protected line to the other(s); it can also be arranged to initiate or prevent tripping (opening) of the remote circuit breaker. With this technique, the relays at both ends of the protected line section can instantly trip the entire line section, using circuit breakers CB, when a fault F1 occurs on the line, but neither relay will respond to a fault F2 outside the protected zone. However, this technique requires expensive and sophisticated communication link(s) between the ends S and R of the protected section. Therefore, the reliability of the technique will also depend on the reliability of the communication link and device.

Applicant's previous published patent application GB 2 341 738 A, relates to power line protection using distance protection techniques operating in instant and delayed operation modes. Using suitable algorithms, the invention enables power line protection apparatus or relays to make the decision as whether to operate the associated circuit breaker(s) instantly, or after a delay, depending on the system and fault conditions. The technique in fact provides the protected zone with a clearly defined boundary using one point measurement only. In other words, it is a unit protection apparatus which does not need a communication link.

Figure 1(c) of the present specification will be used as an example to describe the prior invention of GB 2 341 738 A as an introduction to the present invention. Figure 1(c) shows a multi-section power line system with the protection apparatus RS1 and RR1 installed at each end S and R of the protected line section IL-1. BS1 and BR1 are three-phase circuit breakers used to protect line section IL-1. RR2 and BR2 are respectively the protection apparatus and the three-phase circuit breaker responsible for the protection of line section EL-2, which is outside the protected zone IL-1. The protection zone of the protection apparatus RS1 covers the line section IL-1, while the fault detection of RS1 covers both Zone 1 and Zone 2 from the end 'S'.

The protection apparatus or relay uses the previously stated distance technique (described in relation to Figure 1(a)) as the means for fault detection and protection. The basic principle of the distance protection technique is well known and will not be reviewed here. There are two operating modes of the protection apparatus RS1, the delayed operation mode and the instant operation mode. Here the word 'operation' means to open or close circuit breaker(s), which could be one phase of the three phase circuit breaker BS1 (single-phase tripping or closing) or all three phases of the circuit breaker concurrently (three-phase tripping or closing). The protection apparatus makes a decision as whether the associated circuit breaker(s) should open instantly or after a delay, depending on the system and fault condition.

With reference to Figure 1(c), for a fault F1 occurring on section IL-1 within the protection Zone 1 of both protection apparatus RS1 and protection apparatus RR1, RS1 and RR1 will operate to trip the line section IL-1 instantly. However, for a fault F2 occurring close to one end of the line section IL-1 but inside it, or a fault F3 occurring close to one end of the line section IL-1 but outside it on line section EL-2 and within the Zone 2 reach of the protection apparatus RS1, the relays RR1 or RR2 which are close to the fault point will quickly detect the fault and instantly trip corresponding circuit breakers BR1 if the fault is on line IL-1, or BR2 if the fault is on line EL-2. The protection apparatus RS1 at the end S will first assess the severity of the fault's impact on the power line system to decide which operation mode is to be used in this fault condition, i.e., whether to trip the associated circuit breakers BS1 instantly, or after a delay. A criterion for the severity of a fault with respect to the levels of the faulted voltage and current signals can be derived and set in advance. If the preset criterion is met, RS1 should enter the instant operation mode. Otherwise, the delayed operation mode will be adopted. Depending on the system and the fault condition to be protected against, the protection apparatus can also be set to operate under instant operation mode only or delayed operation mode only.

In the delayed operation mode, the protection apparatus RS1 will wait while detecting the breaker operation at the end R. The tripping of the remote breaker BR1 means that the fault is inside the protected zone or on the remote busbar associated with the protected line section IL-1. In both cases, RS1 will issue a tripping command to isolate the protected line section IL-1. However, RS1 will not respond if the remote circuit breaker BR2 outside the protected line operates to isolate the fault from line section IL-1.

In the delayed operation mode the protection apparatus is able to offer fast operation for most system and fault conditions, but its response can be slow for some system and fault conditions, such as balanced fault, single pole tripping and no pre-fault current flow. These system and fault conditions can be covered by the instant operation mode of the protection apparatus, in which the protection apparatus will first trip the circuit breaker BS1 at end S and then detect the operation of the remote breaker BR1. An in-zone fault can be assumed if the end R circuit breaker BR1 on the protected line IL-1 opens and the fault is still persistent. This effectively means that the remote relay RR1 has detected an in-zone fault and tripped its associated circuit breaker BR1 on the faulted line section IL-1. In this situation, the protection apparatus RS1 is inhibited from an immediate reclosing operation. Otherwise, when protection apparatus RS1 detects an out-of-zone operation of the remote circuit breaker BR2 and the fault is isolated from the protected line section IL-1, RS1 will issue a reclosing command and close its associated circuit breaker BS1. The disadvantage of this instant operation mode is that operation of the circuit breaker may on occasion be required for a fault outside the protected section.

An object of the invention is to offer fast operation for all system and fault conditions for double circuit line systems without having to use an instant operation mode.

Summary of the Invention

In its broadest aspect, the invention provides a method for the protection of double circuit electrical power lines protected by local and remote circuit breakers, the method comprising sensing electrical quantities measured at the local end of both circuits of the double circuit lines, monitoring the sensed electrical quantities to detect occurrence of a fault, delaying operation of the local circuit breakers on both circuits for a time period sufficient to allow detection of remote circuit breaker operation by its effect on the electrical quantities on both circuits, and if an effect of a fault on a circuit of the double circuit line persists after remote circuit breaker operation, triggering operation of a local circuit breaker to isolate the fault.

The invention also provides protection apparatus for carrying out the method, the protection apparatus being located at a local end of a of double circuit electrical power line for protection of both circuits thereof over a protected zone extending from the local end to a remote end of the power line, the protection apparatus being interfaced with both circuits through current and voltage transducers and being equipped with distance protections for each circuit separately, or with cross differential protection for both circuits.

In more detail, the invention provides a method for protecting a multi-phase electrical power line system, the system comprising

a double circuit power line having local and remote ends,

local and remote circuit breaker means near respective ends of each circuit of the double circuit power line, and local and remote protection apparatus linked to respective local and remote circuit breaker means to trigger operation thereof,

at least one further electrical power line connected to the remote end of the double circuit power line, and

further remote circuit breaker means on the further electrical power line, the further remote circuit breaker means being linked to further remote protection apparatus:

wherein the method is performed by the local protection apparatus of the double circuit power line and comprises the steps of:

sensing electrical quantities on both circuits of the double circuit line at a single local location on each line,

detecting the presence of an electrical fault on the system by analysing changes in the sensed electrical quantities on both circuits of the double circuit line, and

if a fault is detected, triggering operation of a local circuit breaker means only:

(a) after a time period sufficient to allow detection of remote circuit breaker operation by analysing changes in the sensed electrical quantities on both circuits of the double circuit line, and

(b) if the effect of the fault on the double circuit line persists after remote circuit breaker operation.

We prefer that the sensed electrical quantities include phase currents and quantities representative of changes in levels and angles of the phase currents. Sensed electrical quantities representative of changes in levels and angles of the phase currents preferably comprise superimposed currents and zero, negative and positive sequence currents.

Correct detection of remote circuit breaker operation may be facilitated by the steps of predefining a time window within which operation of remote circuit breakers can be expected, and ignoring any changes in unfaulted phase currents outside the predefined time window; operation of a remote circuit breaker may be further confirmed by the step of comparing magnitudes of superimposed current signals generated by remote circuit breaker operation with magnitudes of superimposed current signals generated by a fault.

To derive the superimposed current, the local protection apparatus may sense the electrical quantities at a sampling frequency which is an integer multiple of a power system frequency, delay the sampled current values in a memory means of the local protection apparatus for one cycle of the power system frequency and subtract the delayed sample from the most recent current sample.

In the preferred embodment, the sensed electrical quantities further comprise first and second ratio signals, the first ratio signal representing a change in the zero and negative sequence currents with respect to change in the positive sequence current and the second ratio signal representing a change in the positive sequence quantity with respect to its pre-fault value. Once a fault has been detected, the method can use the first and second ratio signals to ascertain system and fault conditions, thus:

(a) if the first ratio signal has a zero value, the system is ascertained to be in electrical balance with either no fault present or a balanced fault present,

(b) if the second ratio signal has a value greater than a predefined threshold value, an unbalanced fault is ascertained to be present,

(c) if the first ratio signal has a value greater than a predefined threshold value, the system is ascertained to be electrically unbalanced with an unbalanced fault present.

In one embodiment of the invention, the method comprises a distance protection technique. In an alternative embodiment, the method comprises a cross-differential protection technique.

A protection apparatus suitable for the distance protection technique comprises two parts located at the local end of the double circuit line section, each part being responsible for the protection of an individual line of the double circuit line and interfacing with their respective lines through current and voltage transducers, a two-way communication channel being arranged to connect the two parts of the protection apparatus for information exchange.

A protection apparatus suitable for either technique comprises a single part located at the local end of the double circuit line section, the single part being responsible for the protection of both lines and interfacing with both lines through current and voltage transducers and equipped with distance protections for each line separately, or with cross differential protection for both lines.

Further aspects of the invention will be apparent from a study of the following description and claims.

**Description of the Drawings**

Embodiments of the invention will now be described by way of example only, with reference to the drawings, in which:

**Figure 1(a)** is an equivalent circuit for a typical distance protection scheme;

**Figure 1(b)** is an equivalent circuit for a typical unit-protection scheme;

**Figure 1(c)** is an equivalent circuit of a power line system used to illustrate operation of applicant's prior art protection apparatus;

**Figures 2(a) and 2(b)** are equivalent circuits of power line systems having double circuit configurations used to demonstrate the invention embodied in the protection apparatus RS1/RS2 or RS12;

**Figure 3(a)** is a diagram to illustrate a technique for the derivation of super-imposed current signals;

**Figure 3(b)** is a graphical representation of waveforms of super-imposed current signals;

**Figures 4 to 14** comprise graphs showing RMS values of the phase currents, sequence currents, Ratio (Ratio 1 or Ratio 2, as explained later) and super-imposed current signals in double circuit system configurations under a variety of different fault conditions, using the fast operation mode of the invention protection apparatus RS1/RS2 or RS12 of Figure 2;

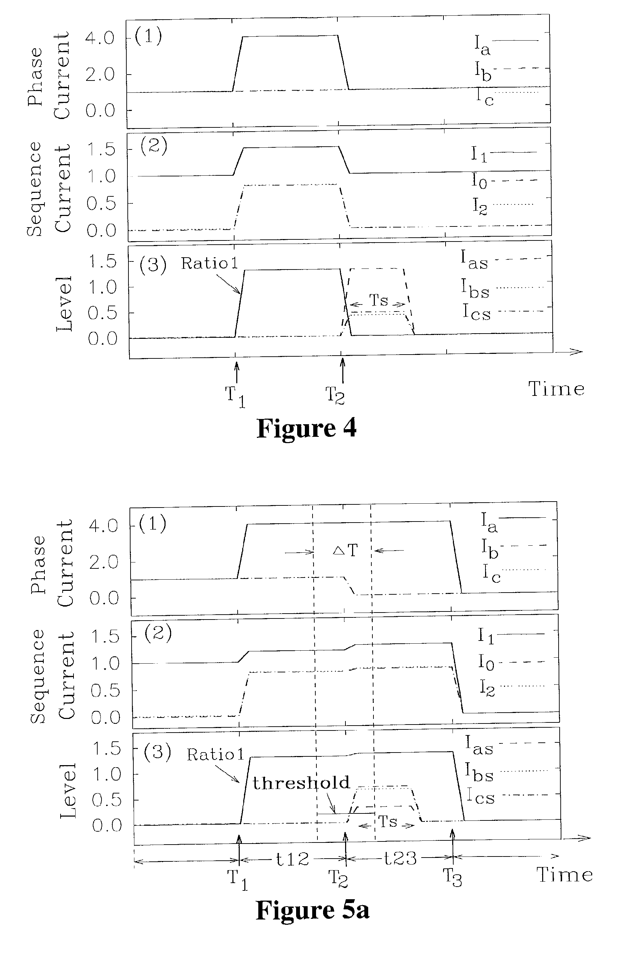

**Figure 4** illustrates a single phase (phase 'a') to earth fault outside the protection zone of the invention protection apparatus, using three-phase (i.e., three-pole) operation of the circuit breakers;

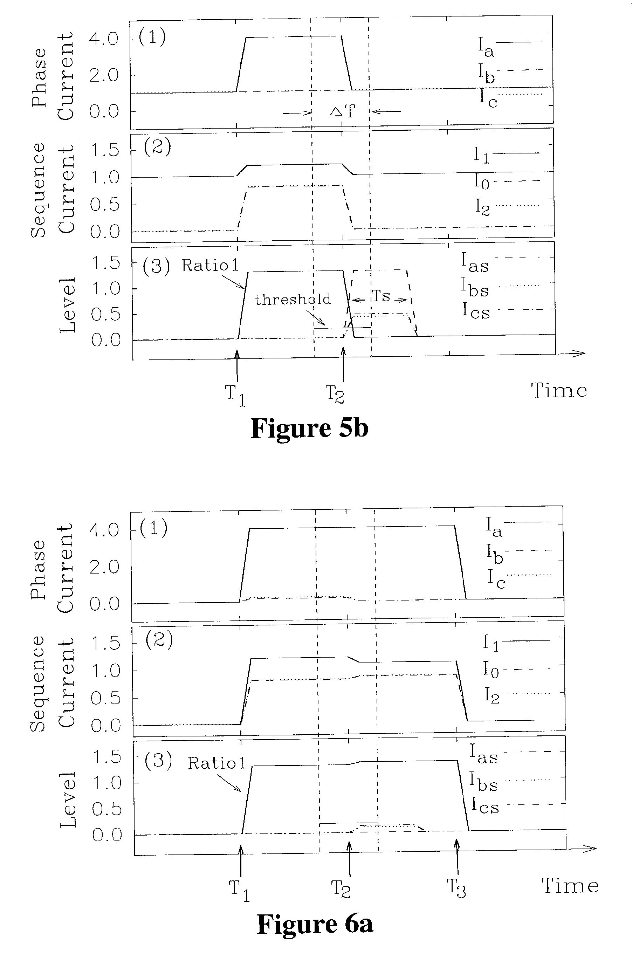

**Figures 5a and 5b** illustrate a single phase (phase 'a') to earth fault inside the protection zone of the invention protection apparatus, and with pre-fault current flow, using three-phase operation of the circuit breakers;

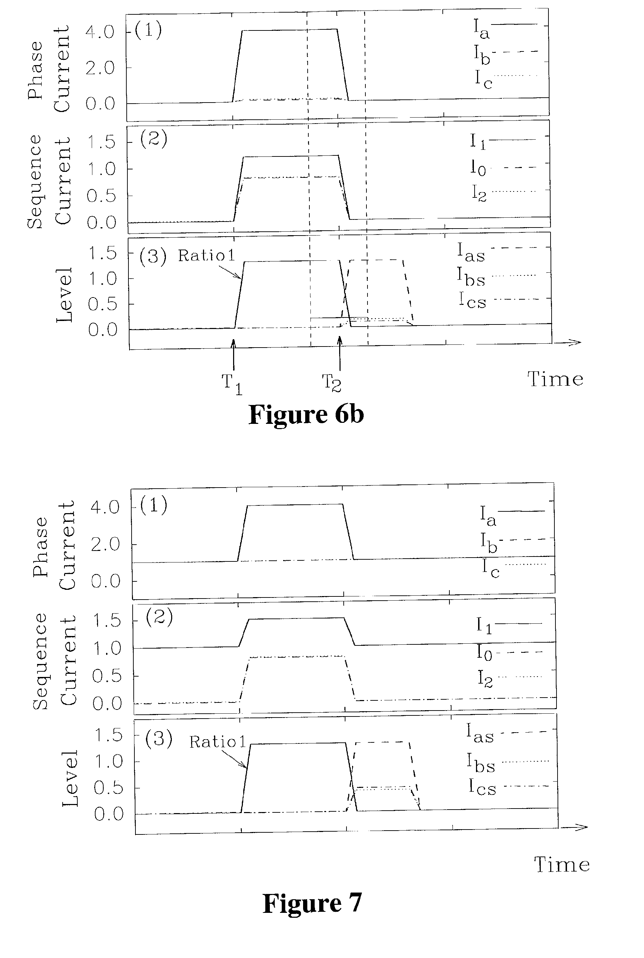

**Figures 6a and 6b** illustrate a single phase (phase 'a') to earth fault inside the protection zone of the invention protection apparatus, but without pre-fault current flow, using three-phase operation of the circuit breakers;

**Figure 7** illustrates a single phase (phase 'a') to earth fault outside the protection zone of the invention protection apparatus, using single-phase (i.e., single-pole) operation of the circuit breakers;

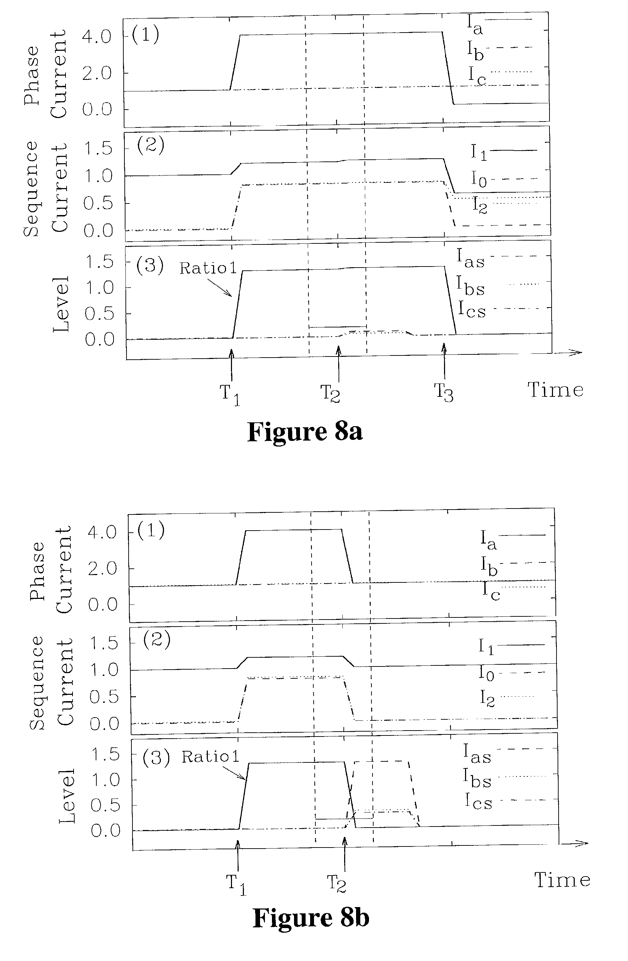

**Figures 8a and 8b** illustrate a single phase (phase 'a') to earth fault inside the protection zone of the invention protection apparatus and with pre-fault current flow, using single-phase (i.e., single-pole) operation of the circuit breakers;

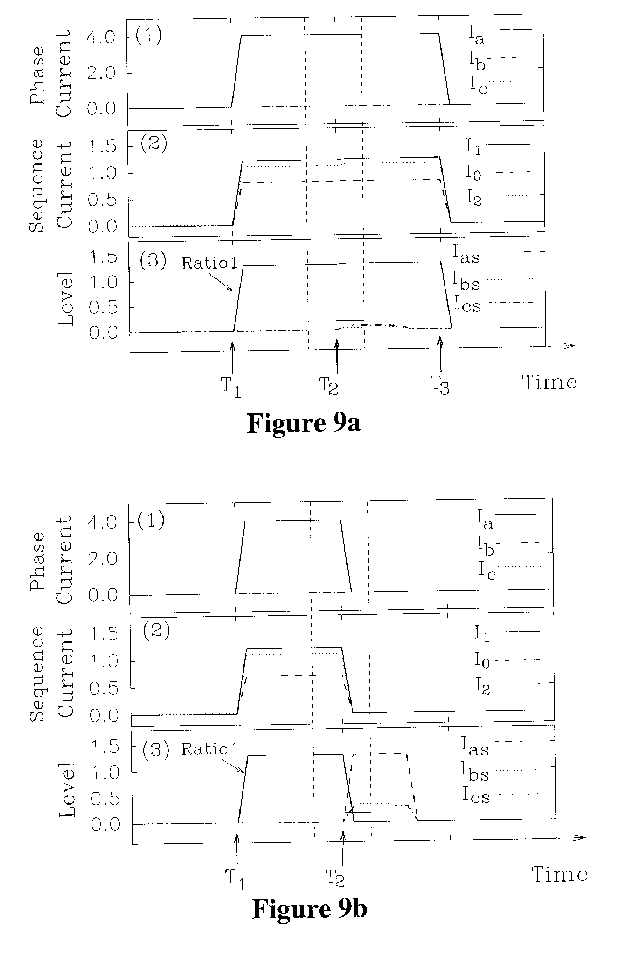

**Figures 9a and 9b** illustrate a single phase (phase 'a') to earth fault inside the protection zone of the invention protection apparatus but without pre-fault current flow, using single-phase (i.e., single-pole) operation of the circuit breakers;

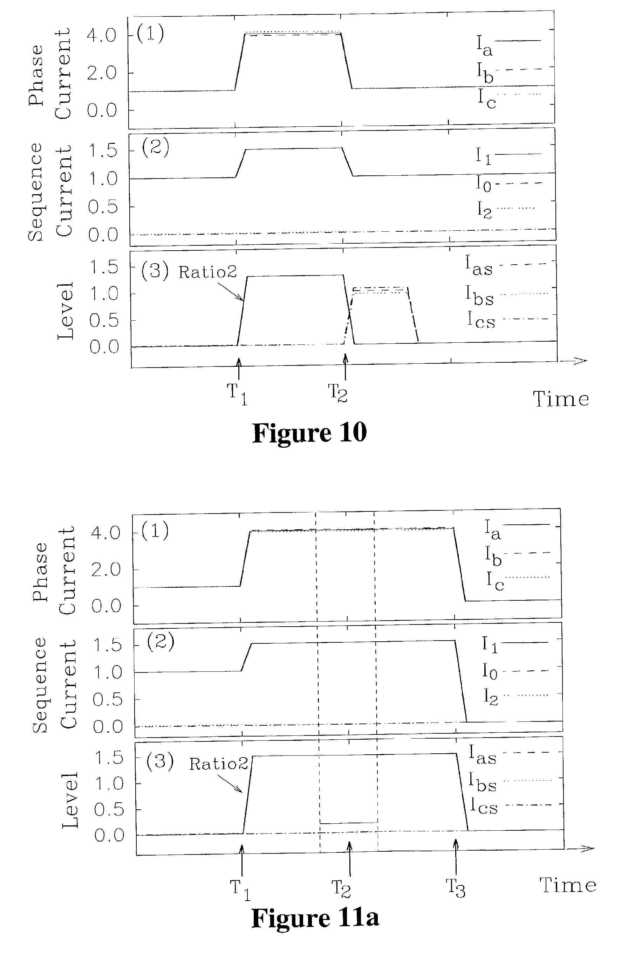

**Figure 10** illustrates a three phase (phase 'a', 'b' and 'c') to earth fault outside the protection zone of the invention protection apparatus, using three-phase operation of the circuit breakers;

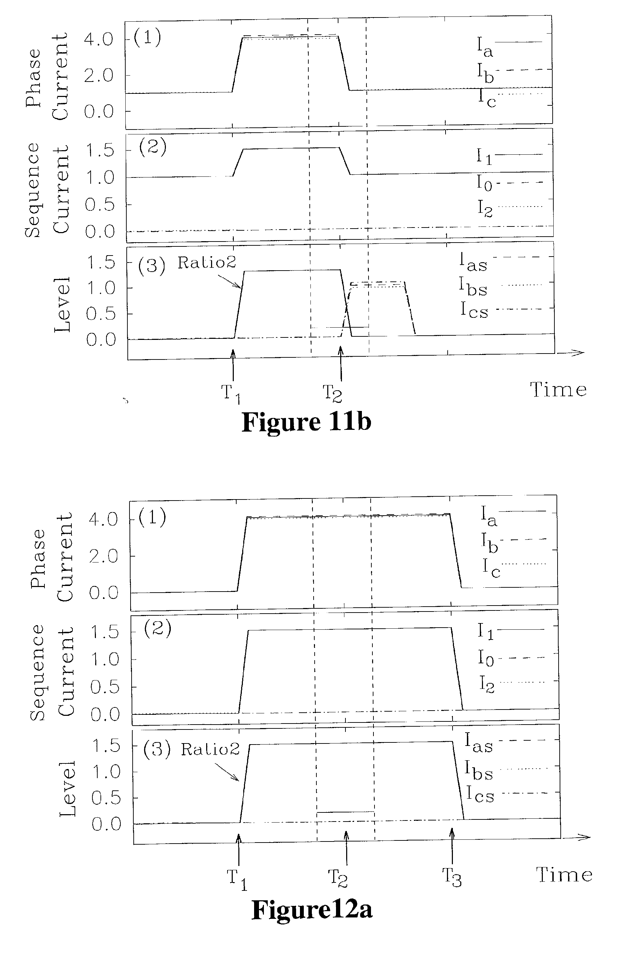

**Figures 11a and 11b** illustrate a three phase (phase 'a', 'b' and 'c') to earth fault inside the protection zone of the invention protection apparatus and with pre-fault current flow, using three-phase operation of the circuit breakers;

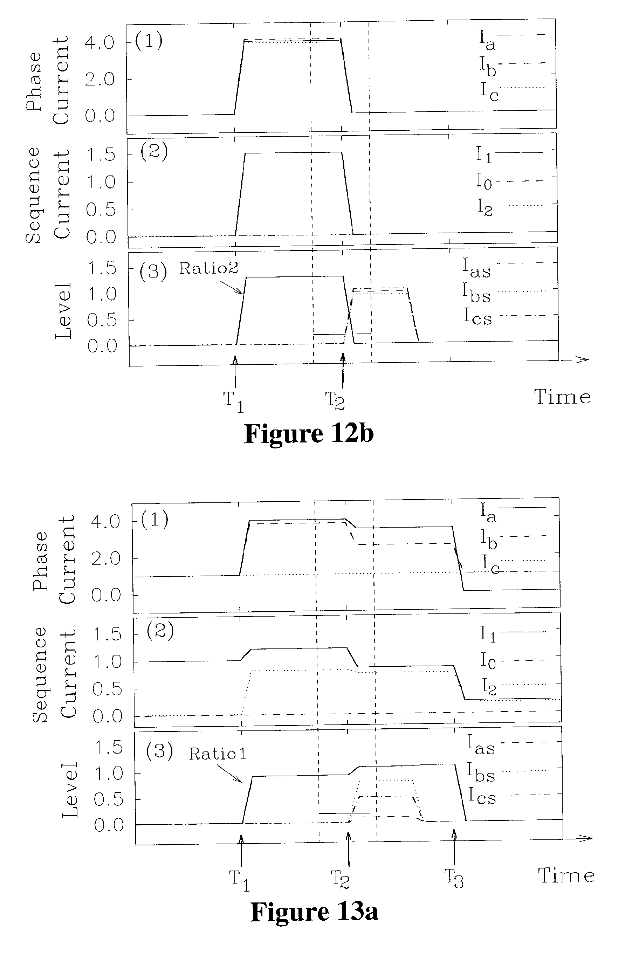

**Figures 12a and 12b** illustrate a three phase (phase 'a', 'b' and 'c') to earth fault inside the protection zone of the invention protection apparatus but without pre-fault current flow, using three-phase operation of the circuit breakers;

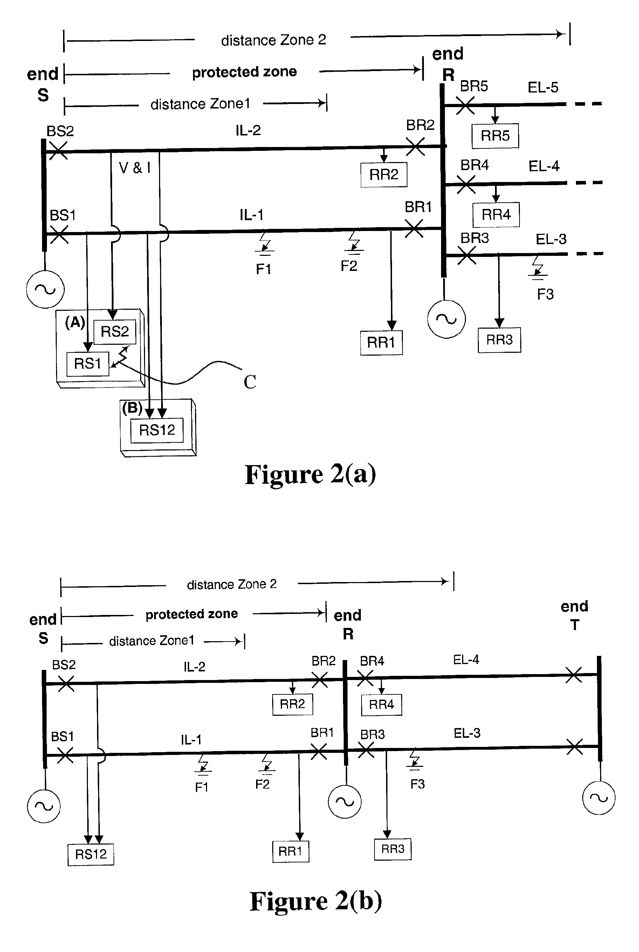

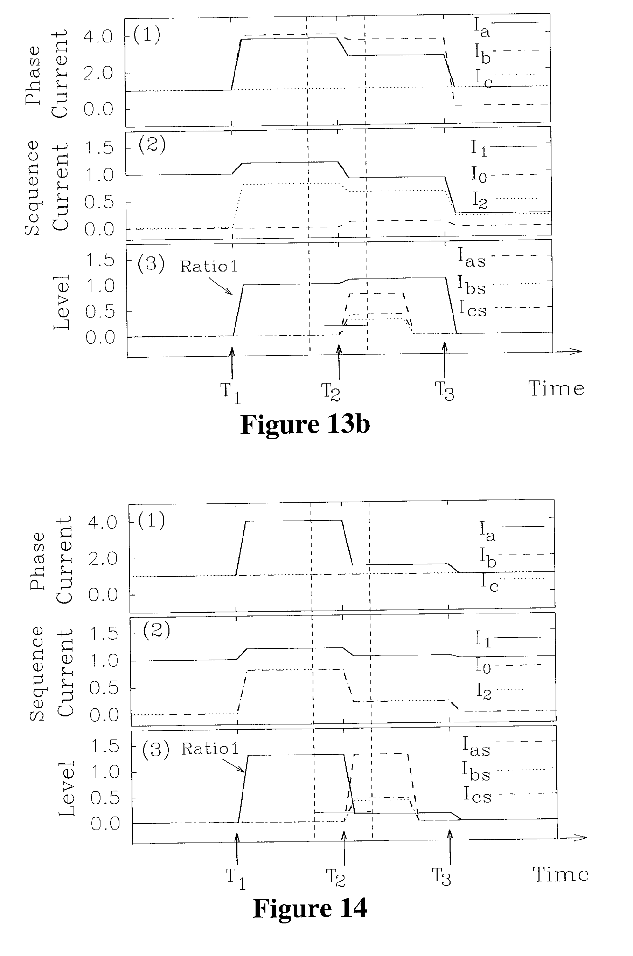

**Figures 13a and 13b** illustrate a cross-circuit fault (phase 'a' of circuit IL-1 to phase 'b' of circuit IL-2) inside the protection zone of the invention protection apparatus, using single-phase operation of the circuit breakers; and

whereas Figures 4 to 13 particularly relate to the system configuration of Figure 2(a), **Figure 14** particularly relates to the system configuration of Figure 2(b) and illustrates a single phase (phase 'a') fault outside the protection zone of the invention protection apparatus, using three-phase operation of the circuit breakers.

**Detailed Description of Preferred Embodiments**

BASIC PRINCIPLES

The present invention provides a protection apparatus that is designed to offer fast protection of double circuit line systems without the need for data communication from any remote protection apparatus. It therefore extends the delayed operation mode described in GB 2 341 738 A. The protection apparatus of the present invention relies on techniques such as distance or cross-differential protection techniques for the detection of the occurrence of a fault, and more importantly for the detection of remote circuit breaker operation, using quantities derived from both circuits of the double circuit lines.

The cross differential protection technique is also a non-unit protection technique for application to double circuit lines only. The technique works by calculating the differential in current between each of the parallel phases of a double circuit line. In principle this difference tends to zero for an unfaulted line. Any differential current between the lines implies a fault, while the magnitude of this differential will be positive for a fault on one of the lines in the double circuit and negative for a fault on the other line. As in the case of the distance protection technique, the cross differential technique cannot offer high-speed protection for the entire protection zone since there is a zone at the remote end of the line which cannot be protected by the cross differential technique alone.

Figures 2(a) and 2(b) show respectively first and second typical configurations of double circuit line systems, which will be used to describe a protection apparatus according to the present invention. As in Figure 1, the symbol × represents a circuit breaker. As shown in Figure 2a, the protected section of the double circuit system consists of two line sections, IL-1 and IL-2. BS1, BS2, BR1 and BR2 are circuit breakers employed to protect each line section respectively. BR3, BR4 and BR5 are employed for the protection of the line sections EL-3 to EL-5, which are outside the protected double circuit section. In the explanation given below, the distance technique is used to demonstrate the invention. According to the invention, there are two alternative implementations of the protection apparatus (A) and (B), both based on the principle shown in Figure 2a.

In the first implementation (A), there are two separate parts RS1 and RS2 of the local protection apparatus, both located near end S of the double circuit line section. Using the distance protection technique at end 'S', each part RS1 and RS2 is responsible for the protection of an individual line of the double circuit, IL-1 and IL-2 respectively. Protection apparatus RS1 interfaces with line IL-1 through current and voltage transducers (not shown) and RS2 interfaces likewise with line IL-2. A two-way communication channel, indicated by the double-headed zig-zag arrow C, is arranged to connect the two parts of the protection apparatus for information exchange.

In the second implementation (B), just one protection apparatus RS12 at the end 'S' of the parallel circuit is responsible for the protection of both lines IL-1 and IL-2 of the double circuit. In this case, the protection apparatus interfaces with both lines through current and voltage transducers and is equipped with distance protections for each line separately, or with cross differential protection for both lines.

The examples given below will apply to both cases, although form (B) is used for demonstration purposes.

With reference to Figure 2(a), for a fault F2 or F3 occurring close to end 'R' outside Zone 1 and inside Zone 2 of the invention protection apparatus RS12, the relays RR1, RR2 or RR3 etc. which are close to the fault point will quickly detect the fault. The relays RR1, RR2 or RR3 will then instantly trip their corresponding circuit breakers BR1 (if the fault is on line IL-1) or BR2 (if fault is on line IL-2) or BR3 (if fault is on line EL-3). The invention protection apparatus RS12 at the end 'S' will wait and detect whether a circuit breaker BR1, BR2 or BR3 on the section IL-1, IL-2 or EL-3 at the remote end R has tripped or not. If one of the remote circuit breakers BR1 or BR2 on a protected section operates and the system is still on an unbalanced condition due to the continued presence of the fault, the protection apparatus RS12 will issue a tripping command to BS1 or BS2 to isolate the protected line section IL-1 or IL-2. Otherwise, protection apparatus RS12 will give no response if a remote circuit breaker outside the protected line (for example, BR3) operates to isolate the Zone 2 fault from line sections IL-1 and IL-2.

The technique for determining whether a fault is inside the protected zone is based on detecting operation of remote circuit breakers on both circuits.

As will be evident from Figure 2a, although the opening of the remote in-zone circuit breaker BR1 for a fault F2 on IL-1 near busbar 'R' may not cause changes in the current detected on IL-1 at end 'S', it will cause a change in the double circuit system configuration. This configuration change will result in a significant change in the levels and angles of the phase currents on the healthy (i.e., unfaulted) circuit IL-2, and these changes will occur within a short time period from inception of the fault. It is these changes in current that the invention protection apparatus relies on to detect operation of the remote circuit breakers for different system and fault conditions. The above-mentioned sequence and superimposed current quantities are used in detecting the changes in the levels and angles of the current signals. For an explanation of sequence and superimposed current and voltage quantities and their derivation, the reader should consult our prior patent publication GB 2 341 738 A and "Power System Protection", Vol. 4: "Digital Protection and Signalling", Edited by The Electricity Training Association, The Institution of Electrical Engineers, London, UK, 1995.

This invention technique overcomes the limitations of prior art technology used to detect the operation of the remote breaker, in that it can guarantee fast operation for system and fault conditions such as: (i) three phase or three phase to earth faults; (ii) no pre-fault loading on line; and (iii) single pole tripping.

The time delay from inception of the fault to opening of the remote circuit breaker will be the summation of the response times of the remote relay or protection apparatus and the remote circuit breaker. Since this delay will vary slightly depending on the response time of the relay and circuit breaker to different fault conditions, a time window can be predefined within which the operation of a remote circuit breaker can be expected. Any changes in the level of the healthy (i.e., unfaulted) phase current outside this predefined window will be ignored. This will ensure the correct detection of the remote circuit breaker operation. At the same time, the magnitudes of the superimposed current signals generated by circuit breaker operation can be compared with that of superimposed signals generated by a fault, from which the circuit breaker operation can be further confirmed.

**Algorithm used**

(a) Ratio signals for detection of system balanced operating condition.

Two ratio signals are used to detect whether a system is in a balanced operation or not. A first ratio signal expresses the change in the zero and negative sequence quantities with respect to the change of the positive sequence quantity and is used as the main criterion to detect whether the system is in a balanced operating condition or not. This Ratio 1 signal is given in equation (1):

$$R_1(k) = \frac{S_2(k) + S_0(k)}{S_1(k)} \tag{1}$$

where $S_1(k)$, $S_0(k)$, $S_2(k)$ are the RMS values of the positive, zero and negative sequence quantities and $k$ is the sampling instant.

To cover some special fault conditions, such as three phase and three phase to earth faults, a second ratio signal, Ratio 2, which expresses the change in the positive sequence quantity during a fault period with respect to its pre-fault value, is used as an additional criterion to detect whether the system is in a balanced operating condition or not. This Ratio 2 signal is given as:

$$R_2(k) = \frac{S_1(k) + S_{1pre}(k)}{S_{1pre}(k)} \qquad (2)$$

where $S_{1pre}(k)$ is the RMS value of the pre-fault positive sequence quantity.

The signal $R_1$ will be of zero value under no fault or no unbalanced fault conditions, since negative and zero sequence quantities are not present then, but will be increased to a level well above zero if an unbalanced fault is present on the system. Under the unbalanced fault condition, the signal $R_2$ will increase to a level and return to zero after the clearance of the fault from the system. The theoretical values for the signal $R_1$ will be '1' for a phase-to-phase fault and '2' for phase-to-earth fault with remote circuit breaker open. The level of signal $R_2$ will be well above '1', depending on the pre- and post fault system conditions. As a result, a preset threshold above zero level (say between 0.2 and 0.4) can be used to determine the system fault condition by examining whether the one of the two ratio signals $R_1$ and $R_2$ has exceeded it or not.

(b) Super-imposed signals

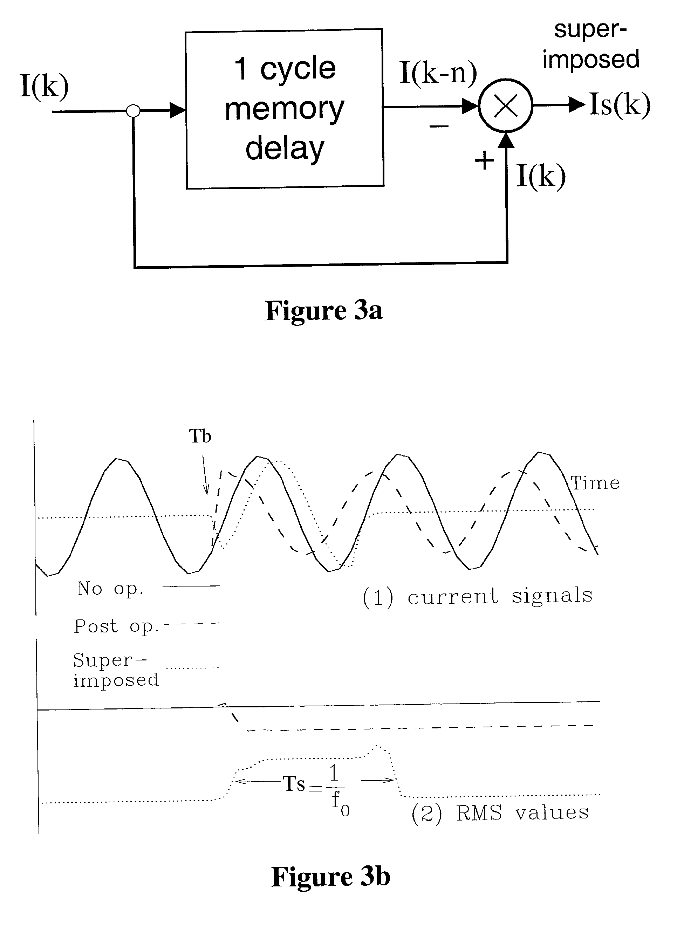

The invention technique also uses super-imposed signals to detect the change in magnitude and angle of the healthy phase currents caused by operation of a remote circuit breaker. As shown in Figures 3(a) and 3(b), $f_0$ is the system frequency, Ts is the time period of the RMS value of the super-imposed current signal and Tb is the time of circuit breaker operation. The super-imposed current is derived by delaying the sampled current values in memory for one cycle; the super-imposed current is then formed by subtracting the delayed sample from the most recent current sample. This technique assumes that the sampling frequency (i.e., the frequency at which measurements are taken by current and voltage transducers on lines IL-1 and IL-2) is an integer multiple of the power system frequency and so there will be a whole number of samples taken per power cycle. If this is so, then a one cycle delay can be implemented by delaying the samples in a fixed number of memory locations. The super-imposed current signal is defined as follows:

$$Is(k) = I(k) - I(k-n) \qquad (3)$$

where k is the sampling time instant, n is the number of samples per cycle; I(k) is the healthy phase current, I(k-n) is the one-cycle-delayed healthy phase current and Is(k) is the healthy phase super-imposed current signal. They are derived from the angle difference between pre and post circuit breaker operations. The theoretical aspect of the super-imposed quantities is well documented in the literature, (see, e.g., the above-mentioned "Power System Protection", Vol.4, IEE, London, UK) and will therefore not be repeated here.

## EXAMPLES

The functioning of protection apparatus according to the invention under various fault conditions will now be further explained with reference to Figures 4 to 14, in which 1a, Ib and Ic represent the three phase currents, $I_1$, $I_0$ and $I_2$ represent the positive, zero and negative sequence currents respectively, Ias, Ibs and Ics represent the three phase super-imposed currents given in equation (3), and the ratio signals, Ratio 1 and Ratio 2 are as given in Equations (1) and (2). The derivation of the sequence quantities was fully explained in our prior patent specification GB 2 341 738 A.

Case 1 Single phase to earth fault with three pole tripping

• **Out-of-zone fault**

Figures 4(1) - 4(3) show the responses for an out-of-zone (i.e., outside the zone protected by protection apparatus RS1/RS2 or RS12) single phase ('a') to earth fault F3 occurring near busbar 'R' on line section EL-3 as shown in Figure 2a. $T_1$ is the time of fault inception, and $T_2$ is the time when the three phase circuit breaker BR3 opens. As in Figure 3, Ts is the time period of the superimposed current signal. For this external fault position, the responses from the measurements on both IL-1 and IL-2 sections will be identical, therefore only one set of three Figures is used here to demonstrated the responses obtained at the 'S' end of both lines IL-1 and IL-2 of the double circuit. Figure 4(1) shows the level of the three phase current signals, 4(2) shows the sequence current signals, and 4(3) shows the Ratio and super-imposed current signals. As shown in Figure 4, during the normal balanced operation before the fault inception, the three phase current signals are of the same magnitudes and the zero and negative sequence currents remain as zero. There is a significant increase in the faulted phase current $I_a$ and consequently an increase in both the negative $I_2$ and zero $I_0$ sequence currents and the Ratio 1 signal after the fault inception at time $T_1$. The protection apparatus RR3 on line section EL-3 at the end 'R' detects the fault, issues a tripping command and subsequently opens the associated circuit breaker BR3. After the opening of the circuit breaker BR3 at time $T_2$, the fault is isolated from the protected section IL-1 and IL-2, and the system resumes balanced operation. Consequently, the faulted phase current $I_a$ returns to its pre-fault level and the negative current, the zero sequence current, and their associated Ratio signal drop back to zero as shown in Figure 4(2) and 4(3). The protection apparatus RS12 (or RS1/RS2) is microprocessor-controlled and is programmed so that the current/time characteristics shown in Figure 4 inhibit the protection apparatus RS12 at the end 'S' from making a tripping decision for this out-of-zone fault condition. In this case, although for a time Ts the super-imposed current Ibs and Ics increase to a high level caused by the remote circuit breaker operation as shown in Figure 4(3), the Ratio 1 signal returns zero, thereby indicating that the system has returned to balanced operation. Therefore, the fault is identified as an out-of-zone fault.

It should be mentioned here that for an external fault condition, the pre-fault current flow does not affect the performance of the protection apparatus. For an internal fault condition, however, the operation of the protection apparatus will be affected by the flow of the pre-fault current since it relies on the detection of the change in level of the post-fault currents to detect the operation of the remote in-zone circuit breaker. It should be also mentioned here that the fault itself also generates super-imposed currents that are not shown in Figure 4 since this particular information is not used by the protection apparatus.

**• Typical in-zone fault with pre-fault current flow**

In Figure 5, $T_1$ is the time of fault inception, $T_2$ is the time when the three phase circuit breaker BR1 opens and $T_3$ the time when the three phase circuit breaker BS1 opens. Figures 5a(1), 5a(2) and 5a(3) show the responses at end S obtained from the measurements and derived quantities for the device installed on line IL-1 and Figures 5b(1), 5b(2) and 5b(3) show those for line IL-2.

Figures 5a and 5b show the corresponding responses of the protection apparatus for a typical in-zone single phase to earth fault ('a'-'e') near busbar 'R' on the line section IL-1 during the periods of pre-fault and post-fault with breaker operations. In this case, there is a pre-fault current flow between ends 'S' and 'R'.

For line section IL-1, the phase and sequence signals are shown in Figures 5a(1) and 5a(2) respectively and the Ratio and super-imposed current signals are shown in Figure 5a(3). For line section IL-2, the phase and sequence signals are shown in Figures 5b(1) and 5b(2) respectively and the Ratio and super-imposed current signals are shown in Figure 5b(3). $T_1$ is the time of fault inception. After the opening of the remote end circuit breaker BR1 at time $T_2$, the phase 'b'

and 'c' of line section IL-1 becomes open circuit at end 'R'. Consequently $I_b$ and $I_c$ drop to zero as shown in Figure 5a(1). However, the fault on phase 'a' has not been cleared by the remote circuit breaker operation since the fault is inside the protected zone. The faulted phase current $I_a$ and the negative current, zero sequence current and their associated Ratio signal on IL-1 remain at a high level.

This change also produces super-imposed current signals for the time Ts as shown in Figures 5a(3) and 5b(3). The protection apparatus RS12 at the end 'S' detects both the changes in the magnitudes of the unfaulted phased currents as shown in Figure 5a(1) and the super-imposed current signals through the thresholds set as shown in both Figure 5a(3) and 5b(3). At the same time, the Ratio signal for IL-1 remains at a high level, which means that the line IL-1 is still in an unbalanced operating condition. Consequently, the operation of remote circuit breaker BR1 inside of the protected zone is detected for this in-zone fault condition. RS12 therefore issues a tripping command and subsequently circuit breaker BS1 opens to isolate the faulted line section IL-1 at time $T_3$.

In the invention, the protection apparatus detects the operation of the remote circuit breaker within a short time window $\Delta T$ after the fault inception as shown in Figure 5a. The $\Delta T$ is centred around a time period which is the summation of the response time of the remote relay and the remote circuit breaker. Any disturbance which may be caused by various reasons outside the predefined time window will not be taken into consideration by the protection apparatus to ensure the correct operation can be obtained for various system and fault conditions.

As shown in Figure 5a, the time delay from the fault inception at time $T_1$ to the opening of the circuit breaker BS1 at time $T_3$ mainly consists of 2 time periods, t12 and t23. Period t12 is the elapsed time from the fault inception to the operation of the end 'R' circuit breaker BR1, which is the time taken by relay RR1 to detect the presence of a fault (this normally takes about one power frequency cycle) and the time taken for circuit breaker BR1 to open (this normally takes between one to three cycles depending on the circuit breaker used). Period t23 consists of the time taken for the protection apparatus RS12 to identify the operation of circuit breaker BR1, plus the response time of the circuit breaker BS1. In the case of instant operation, the time taken from fault inception to the opening of breaker BS1 at the end 'S' will be the same as the time period t12. Therefore, the total time delay will be the time period of t23, which is approximately 2 to 4 cycles depending on the circuit breaker used.

**• In-zone fault, with no pre-fault current flows**

In Figure 6, $T_1$ is the time of fault inception, $T_2$ is the time when the three phase circuit breaker BR1

opens and $T_3$ the time when the three phase circuit breaker BS1 opens. Figures 6a(1), 6a(2) and 6a(3) are for the signals sensed on line 'IL-1' and Figures 6b(1), 6b(2) and 6b(3) are for the signals sensed on line 'IL-2'.

Figures 6a and 6b show the responses of the protection apparatus for the same in-zone fault condition as that in the above case. However, there is no pre-fault current flow between ends 'R' and 'S' in this case. As shown in Figure 6a(1), the fault occurred at $T_1$, causing an increase in the faulted phase current and subsequently the sequence current and the Ratio signal. After opening the remote in-zone circuit breaker BR1 at $T_2$, the unfaulted phase currents $I_b$ and $I_c$ keep at a very low level. At the same time, there is little change in the level of the ratio signal, as shown in Figure 6a(3). This makes the identification of the exact time of the remote breaker operation impossible if the measurement from the line IL-1 is relied upon. However, when examining the response obtained from line IL-2, the increase in the super-imposed current quantity is clearly evident at the time of opening of the remote circuit breaker BR1 as shown in Figure 6b(3). At the same time, there is a significant drop in the faulted phase current Ia (Figure 6b(1)) and the ratio signal as shown in Figure 6b(3), which indicates that the fault is not on IL-2. This change, together with the high level of the ratio signal on IL-1, as shown in Figure 6a(3), clearly indicates that the operation of BR1 and the fault is on the line section IL-1. Hence, the protection apparatus RS12 detects the internal fault condition and so issues a trip command to open the circuit breaker BS1 to isolate the faulted line section IL-1 at time $T_3$.

Case 2 - Single phase earth fault with single pole tripping

• **Out-of-zone fault**

In Figure 7, $T_1$ is the time of fault inception and $T_2$ is the time when the faulted phase of the circuit breaker BR3 opens. Figure 7 shows the responses for a phase-to-earth ('a'-'e') out-of-zone fault close to busbar 'R' on line section EL-3. As shown in Figure 7(1), the system enters an unbalanced operation condition after the fault inception at time $T_1$ and there is a significant increase in the faulted phase current $I_a$. The opening of the circuit breaker BR3 at time $T_2$ clears the fault on line section IL-1 and IL-2, and the negative sequence current associated with the fault drops to zero. Although the super-imposed currents Ibs and Ics increase to a high level due to the operation of circuit breaker BR3, the Ratio returns to zero as shown in Figure 7(3) and the system then returns to a balanced operation condition, which inhibits the protection apparatus RS12 at the end 'S' from making a tripping decision.

• **Typical in-zone fault with pre-fault current flow**

In Figure 8, $T_1$ is the time of fault inception, $T_2$

is the time when the three phase circuit breaker BR1 opens and $T_3$ the time when the faulted phase of the circuit breaker BS1 opens. Figures 8a(1), 8a(2) and 8a(3) are for the device installed at line 'IL-1' and Figures 8b(1), 8b(2) and 8b(3) are for line 'IL-2'.

Figures 8a and 8b show the response of the protection apparatus to a single phase ('a') in-zone fault on line section IL-1 near busbar R for line IL-1 and IL2 respectively. As shown in Figure 8a(1), the opening of phase 'a' of circuit breaker BR1 at time $T_2$ neither clears the fault on line section IL-1 nor changes the level of the unfaulted phase currents and their associated super-imposed currents. There is no change of the ratio signal derived from IL-1 as shown in Figure 8a(3). As a result, there is no clear indication from the measurements of quantities on line section IL-1 as to when the faulted phase of circuit breaker BR1 opens. However, when examining the response obtained from IL-2, the significant change in the level of the faulted phase current and the super-imposed current resulting from the BR1 operation is clearly evident as shown in Figure 8b(1) and 8b(3). Hence, the protection apparatus RS12 detects this fault condition and issues a tripping command and subsequently opens phase 'a' of the circuit breaker BS1 at time $T_3$, so isolating the faulted phase on section IL-1.

• **In-zone fault, with no pre-fault current flows**

In Figure 9, $T_1$ is the time of fault inception, $T_2$ is the time when the three phase circuit breaker BR1 opens and $T_3$ the time when the faulted phase of the circuit breaker BS1 opens. Figures 9a(1), 9a(2) and 9a(3) are for the device installed at line 'IL-1' and Figures 9b(1), 9b(2) and 9b(3) are for line 'IL-2'.

Figures 9a and 9b show the response of the protection apparatus to the same in-zone fault condition as that of Figure 8 with no pre-fault current flows. Similarly to the above case, although there is no clear indication as when the faulted phase remote breaker opens from the quantities derived from line IL-1, the significant changes in the faulted phase current and the super-imposed current signals derived from line IL-2 clearly indicate when the remote circuit breaker BR1 operates, and the continuous high level of the ratio 1 signal on IL-1 indicates that the fault is on line section IL-1. Therefore, the protection apparatus makes a correct decision to isolate the fault by opening phase 'a' of the circuit breaker BS1 at $T_3$.

Case 3 Three phase fault with three pole tripping

• **Out-of-zone fault**

In Figure 10, $T_1$ is the time of fault inception and $T_2$ is the time when the three phase circuit breaker BR3 opens.

Figure 10 shows the responses for a three phase ('a'-'b'-'c') out-of-zone fault close to busbar 'R' on line section EL-3. As shown in Figure 10(1), there are significant increases in the three phase fault currents after the fault inception at time $T_1$. In this case the Ratio 1 remains as zero and Ratio 2 increases to a high level since the fault is a balanced fault. The opening of the circuit breaker BR3 at time $T_2$ clears the fault on line section IL-1 and IL-2. Although the super-imposed current Ias, Ibs and Ics increases to a high level due to the operation of BR3, the Ratio 2 signal returns to zero as shown in Figure 10(3) and the system then returns to a normal operation condition, which inhibits the protection apparatus RS12 at the end 'S' from making a tripping decision.

### • Typical in-zone fault with pre-fault current flow

In Figure 11, $T_1$ is the time of fault inception, $T_2$ is the time when the three phase circuit breaker BR1 opens and $T_3$ the time when the three phase circuit breaker BS1 opens. Figures 11a(1), 11a(2) and 11a(3) are for the device installed at line 'IL-1' and Figures 11b(1), 11b(2) and 11b(3) are for line 'IL-2'.

Figures 11a and 11b show the response of the protection apparatus to a three phase ('a'-'b'-'c') in-zone fault on line section IL-1 near busbar R for line IL-1 and IL-2 respectively. As shown in Figure 11a(1), the opening of the circuit breaker BR1 at time $T_2$ neither clears the fault on line section IL-1 nor changes the level of the faulted phase current. There is also no change of the Ratio 2 signal derived from IL-1 as shown in Figure 11a(3). Therefore, the quantities derived on line section IL-1 give no clear indication as to when the remote circuit breaker BR1 opens. However, when examining the response obtained from IL-2, the significant change in the level of the faulted phase current and the super-imposed current resulting from the operation of BR1 is clearly evident in Figure 11b(1) and 11b(3). Hence, the protection apparatus RS12 detects this fault condition and issues a tripping command to open the circuit breaker BS1 at time $T_3$, so that the faulted section IL-1 is isolated.

### • In-zone fault, with no pre-fault current flows

In Figure 12, $T_1$ is the time of fault inception, $T_2$ is the time when the three phase circuit breaker BR1 opens and $T_3$ the time when the three phase circuit breaker BS1 opens. Figures 12a(1), 12a(2) and 12a(3) are for the device installed at line 'IL-1' and Figures 12b(1), 12b(2) and 12b(3) are for line 'IL-2'.

Figures 12a and 12b show the response of the protection apparatus to the same in-zone fault condition as that shown in Figure 11 but with no pre-fault current flows. Similarly to the above case, although there is no clear indication from the quantities derived from line IL-1 as to when the remote breaker opens, the significant changes in the faulted phase current and the super-imposed current signals derived from line IL-2 clearly indicate the instant when the remote circuit breaker BR1 operates and the continuous high level of the ratio signal on IL-1 indicates that the fault is on line section IL-1. Therefore, the protection apparatus makes a correct decision to isolate the fault by opening circuit breaker BS1 at $T_3$.

### Case 4 - Cross circuit fault with single pole tripping

In Figure 13, $T_1$ is the time of fault inception, $T_2$ is the time when the three phase circuit breaker BR1 opens and $T_3$ the time when the faulted phase of the circuit breaker BS1 opens. Figures 13a(1), 13a(2) and 13a(3) are for the device installed at line IL-1 and Figures 13b(1), 13b(2) and 13b(3) are for line IL-2.

Figures 13a and 13b show the response of the protection apparatus to a cross-circuit in-zone fault between phase 'a' of IL-1 and phase 'b' of IL-2 near busbar R for line IL-1 and IL-2 respectively. As shown in Figure 13(1), both phase 'a' of circuit breaker BR1 and phase 'b' of BR2 open at time $T_2$, since the fault involves two circuits. The remote circuit breaker operations do not clear the fault on line sections IL-1 and IL-2. Although there is only a slight change in the levels of the faulted phase current signals and the ratio signals when the remote breaker opens at the time $T_2$, the significant increases in the super-imposed current signals detected at both IL-1 and IL-2, together with the high level of the ratio signals, indicates that the fault is an in-zone cross-circuit fault. Consequently, the protection apparatus RS12 detects this fault condition, issues a tripping command and subsequently opens the faulted phase of circuit breaker BS1 (phase 'a') and BS2 (phase 'b') at time $T_3$, so that the faulted phases of IL-1 and IL-2 are isolated.

### Case 5 Single phase-to-earth fault on out-of-zone line of double circuit configuration

Figure 2(b) shows a system configuration different from that of Figure 2(a), in which the remote out-of-zone line is also of a double circuit configuration. The effect of an in-zone fault on Il-1 or IL-2 for the Figure 2(b) system configuration will be essentially the same as for the Figure 2(a) system configuration, since any such fault will be separated from the remote out-of-zone sections by opening of the remote in-zone circuit breaker BR1 or BR2. Hence, all the above examples for the in-zone fault cases are applicable to this configuration, therefore only the response to an external fault such as F3 is examined here. In Figure 14, $T_1$ is the time of fault inception and $T_2$ is the time when the remote, out-of-zone, three phase circuit breaker BR3 opens. Figure 14 shows the response of the protection apparatus RS12 to a single phase-to-earth fault on the line section EL-3 near busbar R, as shown in Figure 2(b). Again, the responses for line IL-1 and IL-2 at end S will be identical for this external fault condition, so only one figure is used here to demonstrate the performance of the protection apparatus. As shown in Figure 14, the opening of the remote circuit breaker BR3 at $T_2$ does not return the system to an balanced operation condition since the source at end 'S' still feeds the fault through line EL-4 and the busbar connection at the end 'T'. However, immediately the circuit breaker BR3 has opened, the fault becomes outside of the Zone 2 reach of the protection apparatus RS12, which therefore is able to detect the change in the fault condition and refrain from operation.

FURTHER FEATURES OF THE INVENTION

It should be understood that the levels of the phase and sequence currents shown in the graphs of all the above examples are of nominal values for demonstration purpose. However, the protection method and apparatus of the invention works under all levels of system voltages, source parameters, pre-fault and post-fault load flow conditions.

The equations (1) to (2) only show a digital algorithm to calculate the ratio signals which are used as the criterion to determine system operation conditions, but the invention can also be based on algorithms and criterion expressed in different forms.

The equation (3) only shows one method of using the super-imposed current signals to detect the operation of the remote circuit breaker, but the invention can also be based on algorithms and criterion expressed in different forms.

In case the remote relay fails to detect a fault or a circuit breaker fails to respond for an out-of-zone fault, the protection apparatus will also have a backup protection function in its software. Because the fault is still on the line, in most circumstance the apparatus will trip the line and wait for a further chance to reclose when a remote out-of-zone fault is cleared by backup protection. Alternatively, a further delay can be arranged to wait for the backup protection of the remote relay to operate, from which can be judged whether a fault is inside the protected zone and the correct action can be taken.

**Claims**

1. A method for protecting a multi-phase electrical power line system, the system comprising
    a double circuit power line (IL-1, IL-2) having local and remote ends (S, R),
    local and remote circuit breaker means (BS1, BS2, BR1, BR2) near respective ends of each circuit of the double circuit power line, and local and remote protection apparatus (RS1/RS2 or RS12, RR1, RR2) linked to respective local and remote circuit breaker means to trigger operation thereof,
    at least one further electrical power line (EL-3, etc.) connected to the remote end (R) of the double circuit power line, and
    further remote circuit breaker means (BR3, etc.) on the further electrical power line, the further remote circuit breaker means being linked to further remote protection apparatus (RR3, etc.):

    wherein the method is performed by the local protection apparatus (RS1/RS2 or RS12) of the double circuit power line and comprises the steps of:

        sensing electrical quantities on both circuits of the double circuit line at a single local location on each line,
        detecting the presence of an electrical fault (F1 or F2 or F3) on the system by analysing changes in the sensed electrical quantities on both circuits of the double circuit line, and
        if a fault is detected, triggering operation of a local circuit breaker means (BS1 or BS2) only:

            (a) after a time period sufficient to allow detection of remote circuit breaker operation by analysing changes in the sensed electrical quantities on both circuits of the double circuit line, and
            (b) if the effect of the fault on the double circuit line persists after remote circuit breaker operation.

2. A method according to claim 1, in which the sensed electrical quantities include phase currents and quantities representative of changes in levels and angles of the phase currents.

3. A method according to claim 2, further comprising ensuring correct detection of remote circuit breaker operation by the steps of:

    predefining a time window within which operation of remote circuit breakers can be expected, and
    ignoring any changes in unfaulted phase currents outside the predefined time window.

4. A method according to claim 2 or claim 3, in which the sensed electrical quantities representative of changes in levels and angles of the phase currents comprise superimposed currents and zero, negative and positive sequence currents.

5. A method according to claim 4, in which operation of a remote circuit breaker is further confirmed by the step of comparing magnitudes of the superimposed current signals generated by remote circuit breaker operation with magnitudes of superimposed current signals generated by a fault.

6. A method according to claim 4 or claim 5, in which the local protection apparatus senses the electrical quantities at a sampling frequency which is an integer multiple of a power system frequency and the super-imposed current is derived by delaying sampled current values in a memory means of the local protection apparatus for one cycle of the power system frequency and subtracting the delayed sample from the most recent current sample.

7. A method according to any one of claims 4 to 6, in which the sensed electrical quantities further comprise first and second ratio signals, the first ratio signal representing a change in the zero and negative sequence currents with respect to change in the positive sequence current and the second ratio signal representing a change in the positive sequence quantity with respect to its pre-fault value.

8. A method according to claim 7, in which after detection of a fault, the method comprises the steps of using the first and second ratio signals to ascertain system and fault conditions, wherein;

   (a) if the first ratio signal has a zero value, the system is ascertained to be in electrical balance with either no fault present or a balanced fault present,
   (b) if the second ratio signal has a non-zero value greater than a predefined threshold value, an unbalanced fault is ascertained to be present,
   (c) if the first ratio signal has a non-zero value greater than a predefined threshold value, the system is ascertained to be electrically unbalanced with an unbalanced fault present.

9. A method according to claim 8, in which the threshold value is in the range 0.2 to 0.4.

10. A method according to any one of claims 7 to 9, in which the first ratio signal $R_1(k)$ is given by the expression

$$R_1(k) = \frac{S_2(k) + S_0(k)}{S_1(k)},$$

where $S_1(k)$, $S_0(k)$, $S_2(k)$ are RMS values of the positive, zero and negative sequence currents and $k$ is the instant at which the electrical quantities are sensed.

11. A method according to any one of claims 7 to 9, in which the second ratio signal $R_2(k)$ is given by the expression

$$R_2(k) = \frac{S_1(k) + S_{1pre}(k)}{S_{1pre}(k)},$$

where $S_1(k)$ is the RMS value of the positive sequence current, $S_{1pre}(k)$ is the RMS value of the pre-fault positive sequence current, and $k$ is the instant at which the electrical quantities are sensed.

12. A method according to any one of claims 1 to 11, in which the method comprises a distance protection technique.

13. A method according to any one of claims 1 to 11, in which the method comprises a cross-differential protection technique.

14. A protection apparatus arranged to perform the method of claim 12, comprising two parts located at the local end of the double circuit line section, each part being responsible for the protection of an individual line of the double circuit line and interfacing with their respective lines through current and voltage transducers, a two-way communication channel being arranged to connect the two parts of the protection apparatus for information exchange.

15. A protection apparatus arranged to perform the method of claim 12 or claim 13, comprising a single part located at the local end of the double circuit line section, the single part being responsible for the protection of both lines and interfacing with both lines through current and voltage transducers and equipped with distance protections for each line separately, or with cross differential protection for both lines.

16. A method for the protection of double circuit electrical power lines (IL-1, IL-2) protected by local and remote circuit breakers (BS1, BS2, RR1, RR2, BR3, BR4, BR5) at local and remote ends (S, R) respectively of both circuits of the double circuit lines, the method comprising sensing electrical quantities measured at the local end (S) of both circuits, monitoring the sensed electrical quantities to detect occurrence of a fault (F1 or F2 or F3), delaying operation of the local circuit breakers (BS1, BS2) on both circuits (IL-1, IL-2) for a time period sufficient to allow detection of remote circuit breaker operation by its effect on the electrical quantities on both circuits, and if an effect of a fault on a circuit of the double circuit line persists after remote circuit breaker operation, triggering operation of a local circuit breaker (BS1 or BS2) to isolate the fault.

17. Protection apparatus (RS1/RS2 or RS12) for carrying out the method of claim 16, the protection apparatus being located at a local end (S) of a of double circuit electrical power line (IL-1, IL-2) for protection of both circuits thereof over a protected zone extending from the local end (S) to a remote end (R) of the power line, the protection apparatus being interfaced with both circuits (IL-1, IL-2) through current and voltage transducers and being equipped with distance protections for each circuit separately, or with cross differential protection for both circuits.

**Figure 1(a)**

**Figure 1(b)**

**Figure 1(c)**

**Figure 2(a)**

**Figure 2(b)**

I(k) → [1 cycle memory delay] → I(k-n) → super-imposed → Is(k)

**Figure 3a**

Tb

Time

No op. ——

Post op. - - - -

Super-imposed ..........

(1) current signals

$Ts = \dfrac{1}{f_0}$

(2) RMS values

**Figure 3b**

**Figure 4**

**Figure 5a**

**Figure 5b**

**Figure 6a**

**Figure 6b**

**Figure 7**

**Figure 8a**

**Figure 8b**

**Figure 9a**

**Figure 9b**

**Figure 10**

**Figure 11a**

**Figure 11b**

**Figure 12a**

**Figure 12b**

**Figure 13a**

**Figure 13b**

**Figure 14**